# EUROPÄISCHE PATENTANMELDUNG

(11) **EP 4 852 268 A1**
(43) Veröffentlichungstag der Anmeldung: **09.12.2026**
(21) Anmeldenummer: 25181286.3
(22) Anmeldetag: 06.06.2025
(51) Int. Cl.: H02J 3/38, H02J 3/46, H02J 13/00

(54) **BESTIMMUNG VON REGELUNGSVORGABEN ZUR REGELUNG EINES ENERGIENETZES UND REGELUNG EINES ENERGIENETZES**

(71) Anmelder: Siemens Aktiengesellschaft, 80333 München (DE)
(72) Erfinder: Duckheim, Mathias, 91052 Erlangen (DE); Mora Gil, Edwin Camilo, 63741 Aschaffenburg (DE); Schubert, Jano, 91301 Forchheim (DE)
(74) Vertreter: Siemens Patent Attorneys

(57) **Zusammenfassung**

Zur Bestimmung von Regelungsvorgaben zur Regelung eines Energienetzes (1), welches eine Vielzahl von Netzknoten (2a, 2b, 3, 9) aufweist wird basierend auf einem aktuellen Zustand des Energienetzes (1), welcher für jeden Netzknoten (2a, 2b, 3, 9) der Vielzahl von Netzknoten (2a, 2b, 3, 9) wenigstens eine elektrische Größe angibt, durch ein Optimierungsverfahren für jeden regelbaren Netzknoten (2a, 2b) der Vielzahl von Netzknoten (2a, 2b, 3, 9) ein Regeleingriff bestimmt, der eine Veränderung einer vorgegebenen Regelgröße (7) des jeweiligen regelbaren Netzknotens (2a, 2b) angibt. Für jeden der regelbaren Netzknoten (2a, 2b) wird abhängig von dem jeweiligen Regeleingriff ein Maximalwert für die Regelgröße (7) berechnet und eine Regelungsvorgabe zur Regelung der Regelgröße (7) des jeweiligen regelbaren Netzknotens (2a, 2b) wird basierend auf dem Maximalwert bestimmt.

## Beschreibung

Die vorliegende Erfindung betrifft ein computerimplementiertes Verfahren zur Bestimmung von Regelungsvorgaben zur Regelung eines Energienetzes, wobei das Energienetz eine Vielzahl von Netzknoten einschließlich regelbarer Netzknoten aufweist. Die Erfindung richtet sich auch auf ein entsprechendes Verfahren zur Regelung eines Energienetzes, ein entsprechendes Datenverarbeitungssystem, ein entsprechendes Regelungssystem und ein entsprechendes Computerprogrammprodukt.

Elektrische Energienetze, insbesondere Niederspannungsverteilnetze, spielen eine entscheidende Rolle bei der Stromversorgung von Endverbrauchern. Diese Energienetze beinhalten typischerweise mehrere miteinander verbundenen Netzknoten, einschließlich Transformatoren und verschiedenen Lasten wie Wohn- und Geschäftsgebäuden sowie einspeisenden Quellen wie Photovoltaikanlagen. Mit der zunehmenden Integration von dezentralen Energieressourcen (DERs, englisch: distributed energy resources) wie Photovoltaikanlagen, Windrädern, Wärmepumpen, Ladestationen für Elektrofahrzeuge, Batteriespeichern und so weiter ist die Komplexität der Verwaltung dieser Energienetze erheblich gestiegen.

Traditionell wurden Niederspannungsnetze für einen unidirektionalen Leistungsfluss von zentralisierten Erzeugungsquellen zu Verbrauchern konzipiert. Die Verbreitung von DERs hat jedoch bidirektionale Leistungsflüsse und eine erhöhte Variabilität der Netzbedingungen mit sich gebracht. Diese Veränderung stellt Herausforderungen bei der Aufrechterhaltung der Spannungsstabilität, der Stromqualität und der allgemeinen Systemzuverlässigkeit innerhalb akzeptabler Betriebsgrenzen dar.

Eines der Hauptanliegen in modernen Niederspannungsnetzen ist die Spannungsregelung. Wenn DERs Strom in das Netz einspeisen, können sie Spannungsschwankungen verursachen, die zu Überspannungs- oder Unterspannungszuständen führen können. Diese Spannungsabweichungen können potenziell elektrische Geräte beschädigen, die Energieeffizienz verringern und die Stromqualität für Verbraucher beeinträchtigen. Darüber hinaus erschwert die intermittierende Natur erneuerbarer Energiequellen wie Solar- und Windkraft die Aufgabe, Angebot und Nachfrage in Echtzeit auszugleichen.

Aktuelle Ansätze zur Verwaltung von Niederspannungsnetzen beruhen oft auf statischen Regelungsmethoden oder begrenzten Echtzeitüberwachungsmöglichkeiten. Diese Methoden können möglicherweise die dynamische Natur moderner Netze mit hoher DER-Durchdringung nicht angemessen berücksichtigen. Darüber hinaus macht der Mangel an umfassenden Echtzeitdaten von allen Netzknoten die Implementierung fortschrittlicher Regelungsstrategien, die schnell auf sich ändernde Netzbedingungen reagieren können, schwierig.

Eine weitere Einschränkung bestehender Regelungssysteme ist ihre Abhängigkeit von genauen Netzmodellen und -parametern. In der Praxis kann es schwierig und ressourcenintensiv sein, aktuelle Informationen über die Netztopologie, Impedanzen und andere elektrische Eigenschaften zu erhalten und zu pflegen, insbesondere für Verteilnetzbetreiber, die umfangreiche Niederspannungsnetze verwalten.

In der Veröffentlichung L. Ortmann et al.: "Experimental validation of feedback optimization in power distribution grids", Electr. Power Syst. Res., vol. 189, 2020 wird der Ansatz des Online-Feedback-Optimierungs-Reglers, auch als OFO-Regler bezeichnet, in Verteilnetzen beschrieben.

Bisherige Ansätze im Bereich der OFO versenden direkte Leistungswertvorgaben als Sollwerte an die regelbaren Anlagen, welche von diesen exakt umgesetzt werden. Eine exemplarische Umsetzung findet sich in der Veröffentlichung F. Klein-Helmkamp, I. Zettl, F. Schmidtke, L. Ortmann, and A. Ulbig, "Hierarchical Provision of Distribution Grid Flexibility with Online Feedback Optimization," http://arxiv.org/abs/2403.10315 (abgerufen am 22.05.2025). Dies setzt allerdings voraus, dass dem Regelalgorithmus Echtzeitinformationen zu den Leistungsgrenzen der regelbaren Anlagen vorliegen. Diese Informationen hat der Netzbetreiber für die Niederspannung in der Regel nicht vorliegen.

Eine alternative Umsetzung der OFO ermittelt in einem zentralen Regelalgorithmus lediglich Updates der dualisierten Lagrange-Multiplikatoren und versendet diese anschließend. Eine exemplarische Umsetzung findet sich in der Veröffentlichung S. Zhan, J. Morren, W. Van Den Akker, A. Van Der Molen, N. G. Paterakis, and J. G. Slootweg, "Multi-timescale coordinated distributed energy resource control combining local and online feedback optimization," Electr. Power Syst. Res., vol. 234, p. 110836, Sep. 2024. In diesem Fall ist allerdings an jeder regelbaren Anlage ein lokaler Regler notwendig, welcher selbst aus lokalen Messungen lokale dualisierte Lagrange-Multiplikatoren berechnet, empfangene Multiplikatoren weiterverarbeitet und daraus ein Regelsignal für die regelbare Anlage bestimmt. Dieses Regelsignal ist ebenfalls als Leistungssollwertvorgabe ausgestaltet, sodass in diesem Fall zumindest lokal die Echtzeit-Leistungsgrenzen bekannt sein müssen.

Es ist ein Ziel der vorliegenden Erfindung, ein verbessertes Konzept zur Regelung, beispielsweise OFO-Regelung, eines Energienetzes, insbesondere eines Niederspannungsverteilnetzes, anzugeben, das die Kenntnis von Echtzeitinformationen zu den Leistungsgrenzen der regelbaren Netzknoten nicht erfordert.

Dieses Ziel wird durch den jeweiligen Gegenstand der unabhängigen Ansprüche erreicht. Weitere Ausführungsformen und bevorzugte Ausführungsformen sind Gegenstand der abhängigen Ansprüche.

Die Erfindung basiert auf der Idee, basierend auf einem aktuellen Zustand des Energienetzes durch ein Optimierungsverfahren Regeleingriffe zu bestimmen, abhängig von den Regeleingriffen und Systemgrenzen der regelbaren Netzknoten Maximalwerte für Regelgrößen der regelbaren Netzknoten zu berechnen, und Regelungsvorgaben zur Regelung der Regelgrößen basierend auf den Maximalwerten zu bestimmen.

Gemäß einem Aspekt der Erfindung wird ein computerimplementiertes Verfahren zur Bestimmung, insbesondere automatischen Bestimmung, von Regelungsvorgaben zur Regelung eines Energienetzes bereitgestellt. Das Energienetz weist eine Vielzahl von Netzknoten auf, wobei wenigstens ein Teil der Vielzahl von Netzknoten regelbare Netzknoten sind. Das Verfahren beinhaltet es, basierend auf einem aktuellen Zustand des Energienetzes, der einen jeweiligen Wert für mindestens eine elektrische Größe für jeden Netzknoten der Vielzahl von Netzknoten angibt, einen Regeleingriff für jeden regelbaren Netzknoten der Vielzahl von Netzknoten durch ein Optimierungsverfahren zu bestimmen. Der Regeleingriff gibt eine Änderung einer vorgegebenen Regelgröße des jeweiligen regelbaren Netzknotens an. Für jeden regelbaren Netzknoten der Vielzahl von Netzknoten wird ein Maximalwert für die Regelgröße abhängig von dem jeweiligen Regeleingriff und abhängig von vorgegebenen Systemgrenzen des jeweiligen regelbaren Netzknotens berechnet, und eine Regelungsvorgabe zur Regelung der Regelgröße des jeweiligen regelbaren Netzknotens wird basierend auf dem Maximalwert bestimmt. Die Regelungsvorgaben werden insbesondere den regelbaren Netzknoten zur Regelung des Energienetzes bereitgestellt, welche die jeweilige Regelungsvorgabe insbesondere umsetzen können.

Sofern nicht anders angegeben, können alle Schritte des computerimplementierten Verfahrens von einem Datenverarbeitungssystem durchgeführt werden, welches wenigstens ein Datenverarbeitungsgerät aufweist. Insbesondere ist das wenigstens eine Datenverarbeitungsgerät zur Durchführung der Schritte des computerimplementierten Verfahrens konfiguriert oder angepasst. Hierzu kann das wenigstens eine Datenverarbeitungsgerät beispielsweise ein Computerprogramm speichern, das Befehle beinhaltet, die bei Ausführung durch das wenigstens eine Datenverarbeitungsgerät das wenigstens eine Datenverarbeitungsgerät dazu veranlassen, das computerimplementierte Verfahren auszuführen. Die Begriffe "Datenverarbeitungssystem" und "wenigstens ein Datenverarbeitungsgerät" können austauschbar verwendet werden.

Für den Fall, dass das wenigstens eine Datenverarbeitungsgerät zwei oder mehr Datenverarbeitungsgeräte beinhaltet, können bestimmte Schritte, die mittels des wenigstens einen Datenverarbeitungsgeräts durchgeführt werden, zum Beispiel so verstanden werden, dass verschiedene Datenverarbeitungsgeräte verschiedene Schritte oder verschiedene Teile eines Schrittes durchführen. Insbesondere ist es nicht erforderlich, dass jedes Datenverarbeitungsgerät die Schritte vollständig durchführt. Mit anderen Worten kann die Durchführung der Schritte auf die zwei oder mehr Datenverarbeitungsgeräte verteilt sein.

Aus jeder Ausführungsform des computerimplementierten Verfahrens ergibt sich eine entsprechende Ausführungsform eines Verfahrens zur Bestimmung von Regelungsvorgaben zur Regelung eines Energienetzes, das nicht notwendigerweise rein computerimplementiert ist, indem entsprechende Schritte zur Bestimmung des aktuellen Zustands des Energienetzes und/oder zur Umsetzung der Regelungsvorgaben durch die regelbaren Netzknoten einbezogen werden.

Das Energienetz kann aus der Vielzahl von Netzknoten bestehen. Das Energienetz kann jedoch neben der Vielzahl von Netzknoten auch weitere Netzknoten aufweisen.

Die Bereitstellung der Regelungsvorgabe für den wenigstens einen Reglerparameter kann beispielsweise durch drahtlose oder drahtgebundene Übermittlung an den jeweiligen Netzknoten erfolgen.

Regelgrößen der regelbaren Netzknoten, die zur Umsetzung der jeweiligen Regelungsvorgabe verändert werden können, können beispielsweise Wirk- und/oder Blindleistungen sein, die von den einzelnen Netzknoten in das Netzwerk eingespeist oder aus dem Netzwerk entnommen werden, oder Spannungen, die an den Netzknoten jeweils anliegen, insbesondere entsprechende Spannungsbeträge.

Beispiele für Netzknoten in einem Energienetz umfassen beispielsweise Komponenten und Anschlusspunkte wie Anschlusspunkte für Photovoltaikanlagen, Ladestationen für Elektrofahrzeuge, Anschlusspunkte von Windkraftanlagen, Batteriespeichersysteme, Wärmepumpen, Blockheizkraftwerke, Transformatoren oder Transformatorstationen, Verteiler, die den Strom auf mehrere Leitungen aufteilen und so weiter.

Elektrische Größen eines Netzknotens sind insbesondere messbare elektrische Größen des Netzknotens. Beispiele für elektrische Größen oder Regelgrößen eines Netzknotens sind die Spannung, insbesondere der Effektivwert der Spannung an dem Netzknoten, der Strom durch den Netzknoten, die von dem Netzknoten aufgenommene oder eingespeiste Wirkleistung oder Blindleistung, ein Leistungsfaktor des Netzknotens, also das Verhältnis von Wirkleistung zu Scheinleistung, die Netzfrequenz am Netzknoten, Amplituden und/oder Phasenwinkel von Spannungs- und/oder Stromoberschwingungen an dem Netzknoten und so weiter.

Die wenigstens eine elektrische Größe, die der Zustand des Energienetzes für einen Netzknoten angibt, ist im Allgemeinen nicht gleich der Regelgröße des Netzknotens. Beispielsweise kann für einen Netzknoten die Regelgröße die Wirk- und/oder Blindleistung sein, während die elektrische Größe, die der Zustand des Energienetzes für den Netzknoten angibt, die Spannung an dem Netzknoten ist.

Der Begriff der Regelungsvorgabe kann hier und im Folgenden derart verstanden werden, dass er angestrebte Werte der jeweiligen Regelgrößen der regelbaren Netzknoten definiert. Dies kann ein einzelner Wert, insbesondere ein Sollwert, sein, beispielsweise der Maximalwert für die jeweilige Regelgröße. Die Regelungsvorgabe kann aber auch ein Wertebereich, also insbesondere ein Sollwertebereich, für die jeweilige Regelgröße sein.

Die Regeleingriffe können als Ergebnis des Optimierungsverfahrens, welches insbesondere ein OFO-Regelverfahren sein kann, aufgefasst werden. Das Optimierungsverfahren liefert als Ergebnis insbesondere die Veränderung der jeweilige Regelgröße, welche die Zielfunktion des Optimierungsverfahrens optimiert, beispielsweise minimiert oder maximiert, gegebenenfalls unter vorgegebenen Nebenbedingungen, etwa System- und/oder Regelgrenzen. In konventionellen Regelungsverfahren würden die Regeleingriffe direkt umgesetzt werden, also beispielweise würde die jeweilige Regelgröße derart angepasst, dass möglichst die Veränderung der Regelgröße gemäß dem Regeleingriff resultiert. Dies ist bei dem erfindungsgemäßen Regelungsverfahren nicht der Fall, hier wird nämlich die Regelungsvorgabe, also beispielsweise ein Sollwert oder ein Sollwertebereich, basierend auf dem Maximalwert für die Regelgröße berechnet, der nicht allein durch den Regeleingriff gegeben ist, sondern auch durch die technisch bedingten Systemgrenzen des jeweiligen regelbaren Netzknotens beeinflusst wird.

Die Systemgrenzen können je nach Art des Netzknotens unterschiedlich sein. Die Systemgrenzen können insbesondere durch eine installierte Gesamtleistung des Netzknotens gegeben sein, beispielsweise einer Photovoltaikanlage, einer Wärmepumpe oder einer Ladestation für Elektrofahrzeuge des Netzknotens. Die Systemgrenzen können auch durch eine installierte Energiespeicherkapazität des Netzknotens gegeben sein, insbesondere eines Batteriespeichers des Netzknotens, und so weiter. Die Systemgrenzen können beispielsweise als nominell, insbesondere unabhängig von äußeren Einflüssen wie Wetterbedingungen und/oder unter idealen Bedingungen, gegebene Systemgrenzen, aufgefasst werden. Insbesondere kann es sich um Grenzen für die jeweilige Regelgröße handeln oder um Grenzen für eine von der jeweiligen Regelgröße abhängige Größe.

Ein Vorteil der Erfindung liegt darin, dass die Netzknoten nicht zwingend einen aus der Optimierung resultierenden Regeleingriff umsetzen müssen, sondern die Regelvorgabe durch den Maximalwert für die jeweilige Regelgröße bestimmt wird. Demzufolge passen die Netzknoten beispielsweise nur dann die Regelgröße an, wenn der Maximalwert überschritten wird oder ein Wertebereich von einem Minimalwert für die Regelgröße bis zu dem Maximalwert der Regelgröße verlassen wird.

Die genaue Art und Weise der Anpassung der Regelgröße kann sich je nach Anwendungsbeispiel und den Fähigkeiten des jeweiligen Netzknotens unterscheiden. Beispielsweise kann der Maximalwert als Sollwert genutzt werden oder der Wertebereich als Sollwertebereich oder ein anderer Wert in dem Wertebereich kann als Sollwert genutzt werden. Dies gibt dem Endverbraucher größtmögliche Flexibilität, wobei dennoch ein sicherer Netzbetrieb sichergestellt werden kann. Weitere Vorteile sind, dass keine Echtzeitinformationen, beispielsweise über aktuelle Wirk- und Blindleistungen an den Netzknoten, und nur sehr begrenzte lokale Rechenressourcen an den Netzknoten zur Umsetzung der Regelvorgaben benötigt werden. Diese Vorteile erlauben eine gute Skalierbarkeit der Regelung für den Einsatz in einer Vielzahl von Energienetzen, insbesondere Verteilnetzen.

Gemäß mindestens einer Ausführungsform ist der Regelungsvorgabe gleich dem Maximalwert für die Regelgröße des jeweiligen regelbaren Netzknotens.

Die Festlegung der Regelungsvorgabe gleich dem Maximalwert vereinfacht den Regelungsprozess. Beispielsweise kann der jeweilige Netzknoten den Maximalwert als Sollwert für die Regelgröße nutzen, um die Regelungsvorgabe umzusetzen.

Gemäß mindestens einer Ausführungsform wird für jeden der regelbaren Netzknoten ein Minimalwert für die Regelgröße in Abhängigkeit von dem jeweiligen Regeleingriff berechnet oder der Minimalwert ist vorgegeben. Die Regelungsvorgabe ist ein Wertebereich von dem Minimalwert bis zu dem Maximalwert der Regelgröße.

Die Bereitstellung eines Wertebereichs als Regelungsvorgabe bietet gegebenenfalls größere Flexibilität bei der Regelung und ermöglicht es dem Netzregler, innerhalb eines zulässigen Bereichs zu arbeiten und gleichzeitig die regulatorischen Anforderungen einzuhalten. Beispielsweise kann der jeweilige Netzknoten den Wertebereich als Sollwertebereich für die Regelgröße nutzen, um die Regelungsvorgabe umzusetzen. Alternativ kann der jeweilige Netzknoten einen Wert innerhalb des Wertebereichs als Sollwert für die Regelgröße nutzen, um die Regelungsvorgabe umzusetzen.

Gemäß mindestens einer Ausführungsform wird der aktuelle Zustand des Energienetzes basierend auf jeweiligen aktuellen Messwerten von mindestens einer Messgröße des Energienetzes, insbesondere der Vielzahl von Netzknoten, geschätzt.

Die aktuellen Messungen sind insbesondere Echtzeitmessungen. Die Schätzung des aktuellen Zustands auf der Grundlage von Echtzeitmessungen stellt sicher, dass die Regelungsentscheidungen unter Verwendung aktueller und genauer Informationen über die Netzbedingungen getroffen werden.

Echtzeitmessungen sind dabei insbesondere Messungen, die im Wesentlichen zum Zeitpunkt der Schätzung des aktuellen Zustands des Energienetzes durchgeführt werden, also insbesondere zu einem Zeitpunkt der weniger als einen signifikanten Zeitraum vor der Schätzung des aktuellen Zustands des Energienetzes liegt. Der signifikante Zeitraum kann beispielsweise kleiner oder gleich 2 min oder kleiner oder gleich 1 min oder kleiner oder gleich 30 s sein.

Die mindestens eine Messgröße des Energienetzes kann beispielsweise durch einen oder mehrere der Netzknoten gemessen werden, sofern diese dazu in der Lage sind Echtzeitmessungen durchzuführen beziehungsweise Messungen in Echtzeit an den Netzregler zu übermitteln. Die mindestens eine Messgröße kann auch durch eine Messung an einer Transformatorstation des Energienetzes, welche die Vielzahl von Netzknoten versorgt, gemessen werden.

Gemäß mindestens einer Ausführungsform wird der aktuelle Zustand des Energienetzes basierend auf den aktuellen Messwerten und zusätzlich basierend auf historischen Messdaten des Energienetzes, insbesondere der Vielzahl von Netzknoten, geschätzt.

Die historischen Messdaten können insbesondere in Abgrenzung zu Echtzeitmessdaten verstanden werden. Sie beziehen sich also insbesondere auf vergangene Zeitpunkte oder Zeiträume und repräsentieren bereits dementsprechend Zustände in der Vergangenheit. Wie weit in der Vergangenheit die Zeitpunkte oder Zeiträume liegen, zu denen die historischen Messdaten erfasst wurde, kann unterschiedlich sein. Es kann sich um einige Minuten, Stunden, Tage, Wochen oder mehr handeln. Insbesondere können Messdaten von Smart Metern als historische Messdaten aufgefasst werden, da diese typischerweise eine zeitliche Auflösung von 15 Minuten aufweisen. Die historischen Messdaten können insbesondere von lokalen Messgeräten der jeweiligen Netzknoten erfasst worden sein.

Durch Einbeziehung der historischen Messdaten kann die Genauigkeit der Schätzung des Zustands des Energienetzes weiter erhöht werden.

Gemäß mindestens einer Ausführungsform ist die Vielzahl von Netzknoten mit einer gemeinsamen Transformatorstation verbunden, und die mindestens eine Messgröße hängt von einer Spannung und/oder einer Wirkleistung und/oder einer Blindleistung der Transformatorstation, insbesondere eines Transformators der Transformatorstation, insbesondere einer Sekundärseite oder Sekundärwicklung des Transformators, ab oder ist dadurch gegeben.

Die Nutzung von Messungen der Transformatorstation bietet einen umfassenden Überblick über den Netzzustand, da der Transformator ein kritischer Punkt ist, an dem der Leistungsfluss effektiv in Echtzeit überwacht werden kann.

Zusätzlich können beispielsweise auch entsprechende Echtzeitmessungen an einzelnen oder allen Abgängen der Transformatorstation, die jeweils beispielsweise einen oder mehrere der Netznoten versorgen, der Schätzung des aktuellen Zustands des Energienetzes zugrunde gelegt werden, was die Genauigkeit der Schätzung weiter erhöht.

Gemäß mindestens einer Ausführungsform wird zur Schätzung des aktuellen Zustands des Energienetzes ein Maschinenlernmodell, MLM, insbesondere ein trainiertes Maschinenlernmodell, auf Eingabedaten angewendet, welche die jeweiligen aktuellen Messwerte der mindestens einen Messgröße des Energienetzes enthalten oder davon abhängen.

Ein trainiertes MLM kann als Algorithmus, insbesondere computerimplementierter Algorithmus, aufgefasst werden, der konkrete oder im Weiteren Sinne durch menschliche Verstandesleistungen mögliche Funktionen nachstellen kann. Ein trainiertes MLM kann beispielsweise auch als "trainierte Funktion" bezeichnet werden. Ein MLM kann auch als durch maschinelles Lernen trainierbarer Algorithmus oder als durch maschinelles Lernen trainierbares Modell oder als durch maschinelles Lernen trainierbare Funktion bezeichnet werden. Ein trainiertes MLM kann auch als durch maschinelles Lernen trainierter Algorithmus oder als durch maschinelles Lernen trainiertes Modell oder als durch maschinelles Lernen trainierte Funktion bezeichnet werden. Ein MLM kann in Software und/oder Hardware implementiert sein.

Beim Trainieren eines MLM werden im Allgemeinen Parameter des MLM angepasst oder aktualisiert. Das Trainieren kann überwacht, halb-überwacht oder unüberwacht erfolgen. Das Trainieren kann auch Verstärkungslernen (englisch: reinforcement learning) oder Repräsentationslernen (englisch: representation learning) beinhalten und/oder weitere bekannte Trainingsmethoden. Insbesondere können die Parameter des MLM iterativ über mehrere Trainingsschritte hinweg angepasst werden. Insbesondere kann zum Trainieren eine vordefinierte Verlustfunktion minimiert werden. Zum Anpassen der Parameter kann, falls es sich bei dem MLM um ein künstliches neuronales Netzwerk, ANN (englisch: artificial neural network), handelt, beispielsweise ein Rückpropagationsalgorithmus (englisch: backpropagation) verwendet werden.

Ein MLM kann insbesondere ein ANN, eine Support-Vector-Maschine, einen k-means-Klusteralgorithmus, einen Entscheidungsbaum, und so weiter beinhalten. Insbesondere kann ein ANN ein tiefes neuronales Netzwerk und/oder ein faltendes neuronales Netzwerk, CNN (englisch: convolutional neural network), insbesondere ein tiefes CNN, und/oder ein rekurrentes neuronales Netzwerk, RNN, insbesondere ein rekurrentes CNN, und/oder ein Transformernetzwerk und/oder ein generatives adversariales Netzwerk, GAN, sein oder beinhalten.

Zum überwachten Trainieren des Maschinenlernmodells können umfangreiche Trainingsdatensätze aus dem Energienetz gesammelt werden. Diese Trainingsdatensätze können Messwerte von verschiedenen Netzknoten, Transformatorstationen und anderen relevanten Komponenten umfassen. Die Trainingsdatensätze können Spannungen, Leistungsflüsse, Frequenzen und andere elektrische Parameter beinhalten, die einerseits die Eingangsdaten wiedergeben, also aktuellen Messgrößen der wenigstens einer Messgröße des Energienetzes, und andererseits als Annotationen entsprechende aktuelle Zustände des Energienetzes. Anstatt konkret das Energienetz zu betrachten, für welches das MLM im trainieren Zustand eingesetzt werden soll, kann auch ein Modellnetz genutzt werden oder ein simuliertes Energienetz. Alternativ oder zusätzlich kann beispielsweise Reinforcement Learning eingesetzt werden.

Die Verwendung eines Maschinenlernmodells für die Zustandsschätzung kann die Genauigkeit und Geschwindigkeit des Schätzungsprozesses verbessern und potenziell komplexe Beziehungen im Netz erfassen, die schwierig explizit zu modellieren sein könnten.

Das Trainieren des MLM kann dem erfindungsgemäßen computerimplementierten Verfahren vorgelagert sein, ist also dann nicht Teil des erfindungsgemäßen computerimplementierten Verfahrens. In manchen Ausführungsformen ist das Trainieren des MLM dagegen Teil des erfindungsgemäßen computerimplementierten Verfahrens.

Gemäß mindestens einer Ausführungsform ist mindestens eine elektrische Größe eine Spannung an dem jeweiligen Netzknoten.

Diese Spannungen sind kritische Parameter des Energienetzes, sodass ihre effektive Regelung dazu beitragen kann, die Stromqualität und Systemstabilität besonders zuverlässig aufrechtzuerhalten.

Gemäß mindestens einer Ausführungsform ist die Regelgröße von einer Wirkleistung und/oder einer Blindleistung an dem jeweiligen regelbaren Netzknoten abhängig oder dadurch gegeben.

Die Regelung von Wirk- und/oder Blindleistung ist besonders vorteilhaft für die Verwaltung des Leistungsflusses und der Spannungspegel im Energienetz, sodass sie besonders relevante Regelgrößen darstellen.

Gemäß mindestens einer Ausführungsform wird das Optimierungsverfahren mittels eines OFO-Reglers durchgeführt. Mit anderen Worten ist das Optimierungsverfahren insbesondere ein OFO-Verfahren.

Die OFO ermöglicht Echtzeitanpassungen basierend auf dem aktuellen Netzzustand und ermöglicht eine besonders reaktionsschnelle und adaptive Regelung.

Gemäß mindestens einer Ausführungsform wird nach dem Optimierungsverfahren eine Gesamtheit der Regeleingriffe der regelbaren Netzknoten minimiert, insbesondere unter vorgegebenen Nebenbedingungen.

Die Minimierung der Gesamtheit der Regeleingriffe hilft, unnötige Aktionen und damit verbundenen Verschleiß an Geräten zu reduzieren und gleichzeitig die gewünschte Netzleistung innerhalb festgelegter Grenzen zu erreichen.

Die Gesamtheit der Regeleingriffe ist insbesondere durch ein Maß gegeben, welches umso größer ist, je mehr Regeleingriffe vorgenommen werden und/oder je größer der Betrag der einzelnen Regeleingriffe ist. Die Gesamtheit der Regeleingriffe kann beispielsweise gemäß der OFO-Regelung minimiert werden. Beispielsweise kann die Gesamtheit der Regeleingriffe dargestellt werden durch

**u**^{T}**Mu**,

wobei $u ∈ {ℝ}^{{N}_{u}}$ der Vektor der Regeleingriffe, insbesondere Wirk- und/oder Blindleistungseingriffe, ist, und *Nᵤ* die Anzahl der regelbaren Netzknoten ist. Die Gewichtungsmatrix ***M*** ist eine vorgegebene diagonale, positiv definite Matrix, welche den einzelnen regelbaren Anlagen Aufwand beziehungsweise Kosten für die Regelung zuordnet. Im einfachsten Fall kann Gewichtungsmatrix ***M*** gleich der Einheitsmatrix sein.

Gemäß mindestens einer Ausführungsform wird basierend auf dem aktuellen Zustand des Energienetzes durch das Optimierungsverfahren oder durch ein weiteres Optimierungsverfahren für jeden der regelbaren Netzknoten der Vielzahl von Netzknoten ein weiterer Regeleingriff bestimmt, der eine Veränderung einer vorgegebenen weiteren Regelgröße des jeweiligen regelbaren Netzknotens angibt. Für jeden der regelbaren Netzknoten wird abhängig von dem jeweiligen weiteren Regeleingriff eine weitere Regelungsvorgabe zur Regelung der weiteren Regelgröße des jeweiligen regelbaren Netzknotens abhängig von dem jeweiligen weiteren Regeleingriff bestimmt.

Die Erläuterungen, Merkmale und Vorteile bezüglich des Optimierungsverfahrens, der Regeleingriffe, der Regelgrößen und der Regelungsvorgaben können analog auf das weitere Optimierungsverfahren, die weiteren Regeleingriffe, die weiteren Regelgrößen und die weiteren Regelungsvorgaben übertragen werden.

Die weitere Regelgröße ist beispielsweise eine Blindleistung an dem jeweiligen Netzknoten. In manchen Beispielen ist die Regelgröße die Wirkleistung an dem jeweiligen Netzknoten und die weitere Regelgröße ist die Blindleistung an dem jeweiligen Netzknoten.

Die weitere Regelungsvorgabe kann beispielsweise ein weiterer Maximalwert für die weitere Regelgröße des jeweiligen regelbaren Netzknotens sein, der abhängig von dem jeweiligen weiteren Regeleingriff und abhängig von den vorgegebenen Systemgrenzen und/oder vorgegebenen weiteren Systemgrenzen des jeweiligen regelbaren Netzknotens berechnet werden.

Die Erläuterungen, Merkmale und Vorteile bezüglich des Maximalwerts, des Minimalwerts und des Wertebereichs von dem Minimalwert bis zu dem Maximalwert können analog auf den weiteren Maximalwert, einen entsprechenden weiteren Minimalwert und einen entsprechenden weiteren Wertebereich übertragen werden.

Gemäß einem weiteren Aspekt der Erfindung wird ein Verfahren zur Regelung, insbesondere zur automatischen oder autonomen Regelung, eines Energienetzes angegeben. Dabei ein erfindungsgemäßes computerimplementiertes Verfahren zur Bestimmung von Regelungsvorgaben zur Regelung des Energienetzes durchgeführt. Die Regelungsvorgaben und gegebenenfalls die weiteren Regelungsvorgaben werden den regelbaren Netzknoten zur Regelung des Energienetzes bereitgestellt und das Energienetz wird mittels der regelbaren Netzknoten gemäß den Regelungsvorgaben und gegebenenfalls den weiteren Regelungsvorgaben geregelt.

Gemäß einem weiteren Aspekt der Erfindung wird ein Datenverarbeitungssystem bereitgestellt, das dazu eingerichtet ist, das oben beschriebene computerimplementierte Verfahren zur Bestimmung von Regelungsvorgaben zur Regelung eines Energienetzes durchzuführen.

Die Begriffe "Datenverarbeitungssystem" und "wenigstens ein Datenverarbeitungsgerät" können im Rahmen der vorliegenden Offenbarung austauschbar verwendet werden. In der vorliegenden Offenbarung kann ein Datenverarbeitungsgerät zum Beispiel als ein Gerät mit Verarbeitungsschaltkreisen zur Verarbeitung von Daten verstanden werden. Ein Datenverarbeitungsgerät kann also Rechenoperationen durchführen, um Daten zu verarbeiten. Ein indizierter Zugriff auf eine Datenstruktur, zum Beispiel eine Look-Up-Tabelle, LUT, oder eine Datenbank, kann ebenfalls als Rechenoperation betrachtet werden. Auch eine teilweise oder vollständig in Hardware implementierte Verarbeitung von Daten kann als Rechenoperation betrachtet werden.

Ein Datenverarbeitungsgerät kann insbesondere einen oder mehrere Computer, einen oder mehrere Mikrocontroller und/oder einen oder mehrere integrierte Schaltkreise umfassen, beispielsweise einen oder mehrere anwendungsspezifische integrierte Schaltkreise, ASIC, ein oder mehrere feldprogrammierbare Gate-Arrays, FPGA, und/oder ein oder mehrere Einchipsysteme, SoC. Ein Datenverarbeitungsgerät kann auch einen oder mehrere Prozessoren enthalten, zum Beispiel einen oder mehrere Mikroprozessoren, eine oder mehrere Zentralprozessoreinheiten, CPU, eine oder mehrere Grafikprozessoreinheiten, GPU, und/oder einen oder mehrere Signalprozessoren, insbesondere einen oder mehrere digitale Signalprozessoren, DSP. Das Datenverarbeitungsgerät kann auch einen physischen oder virtuellen Cluster von Computern oder anderen der genannten Geräte umfassen.

Ein Datenverarbeitungsgerät kann auch eine oder mehrere Hardware- und/oder Softwareschnittstellen umfassen, zum Beispiel für den Empfang und/oder die Bereitstellung von Daten.

Ein Datenverarbeitungsgerät kann auch eine oder mehrere Speichervorrichtungen umfassen. Dabei kann eine Speichervorrichtung als flüchtiger Speicher, beispielsweise als dynamischer Direktzugriffsspeicher, DRAM, oder statischer Direktzugriffsspeicher, SRAM, oder als nichtflüchtiger Datenspeicher, beispielsweise als Nur-Lese-Speicher (ROM), ein programmierbarer Nur-Lese-Speicher, PROM, implementiert sein, als löschbarer programmierbarer Festwertspeicher, EPROM, als elektrisch löschbarer programmierbarer Festwertspeicher, EEPROM, als Flash-Speicher oder als Flash-EEPROM, als ferroelektrischer Direktzugriffsspeicher, FRAM, als magnetoresistiver Direktzugriffsspeicher, MRAM, oder als Phasenwechsel-Direktzugriffsspeicher, PCRAM.

Gemäß einem weiteren Aspekt der Erfindung wird ein Regelungssystem zur automatischen, beispielsweise autonomen, Regelung eines Energienetzes bereitgestellt. Das Regelungssystem umfasst ein erfindungsgemäßes Datenverarbeitungssystem und jeweilige lokale Regler für die regelbaren Netzknoten, wobei die lokalen Regler dazu eingerichtet sind, das Energienetz gemäß den Regelungsvorgaben zu regeln.

Die lokalen Regler können auch ganz oder teilweise von dem Datenverarbeitungssystem umfasst sein.

Gemäß einem weiteren Aspekt der Erfindung wird ein Computerprogramm bereitgestellt, das Befehle beinhaltet, die, wenn sie von einem Datenverarbeitungssystem ausgeführt werden, das Datenverarbeitungssystem dazu veranlassen, ein erfindungsgemäßes computerimplementiertes Verfahren zur Bestimmung von Regelungsvorgaben zur Regelung eines Energienetzes durchzuführen.

Die Befehle können beispielsweise als Programmcode vorliegen. Der Programmcode kann beispielsweise als Binärcode oder Assembler und/oder als Quellcode einer Programmiersprache, zum Beispiel C, und/oder als Programmskript, zum Beispiel Python, bereitgestellt sein.

Gemäß einem weiteren Aspekt der Erfindung wird ein computerlesbares Speichermedium angegeben, insbesondere ein physisches und/oder nicht-flüchtiges computerlesbares Speichermedium, das ein erfindungsgemäßes Computerprogramm speichert.

Das Computerprogramm und das computerlesbare Speichermedium sind jeweils Computerprogrammprodukte mit den Befehlen.

Weitere Merkmale der Erfindung ergeben sich aus den Ansprüchen, den Figuren und der Figurenbeschreibung. Die oben in der Beschreibung erwähnten Merkmale und Merkmalskombinationen sowie die nachfolgend in der Beschreibung der Figuren erwähnten und/oder in den Figuren gezeigten Merkmale und Merkmalskombinationen können nicht nur in der jeweils angegebenen Kombination, sondern auch in anderen Kombinationen von der Erfindung umfasst sein. Insbesondere können auch Ausführungsformen und Merkmalskombinationen, die nicht alle Merkmale eines ursprünglich formulierten Anspruchs aufweisen, von der Erfindung umfasst sein. Darüber hinaus können Ausführungsformen und Merkmalskombinationen, die über die in den Ansprüchen aufgeführten Merkmalskombinationen hinausgehen oder davon abweichen, von der Erfindung umfasst sein.

Im Folgenden wird die Erfindung anhand spezifischer beispielhafter Implementierungen und entsprechender schematischer Zeichnungen im Detail erläutert. In den Zeichnungen können identische oder funktional identische Elemente mit den gleichen Bezugszeichen bezeichnet werden. Die Beschreibung identischer oder funktional identischer Elemente wird nicht notwendigerweise in Bezug auf verschiedene Figuren wiederholt.

In den Figuren zeigen
- FIG 1: ein Blockdiagramm eines Energienetzes und einer beispielhaften Ausführungsform eines Regelungssystems gemäß der Erfindung;
- FIG 2: ein Flussdiagramm einer beispielhaften Ausführungsform eines erfindungsgemäßen Verfahrens zur Regelung eines Energienetzes;
- FIG 3: ein Blockdiagramm eines Energienetz und eines Maschinenlernmodells zur Verwendung in einer beispielhaften Ausführungsform eines Regelungssystems gemäß der Erfindung während einer Trainingsphase des Maschinenlernmodells;
- FIG 4: ein Diagramm zur Visualisierung der Umsetzung von Regelungsvorgaben in einer weiteren beispielhaften Ausführungsform eines erfindungsgemäßen Verfahrens zur Regelung eines Energienetzes; und
- FIG 5: ein Diagramm zur Visualisierung der Umsetzung von Regelungsvorgaben in einer weiteren beispielhaften Ausführungsform eines erfindungsgemäßen Verfahrens zur Regelung eines Energienetzes.

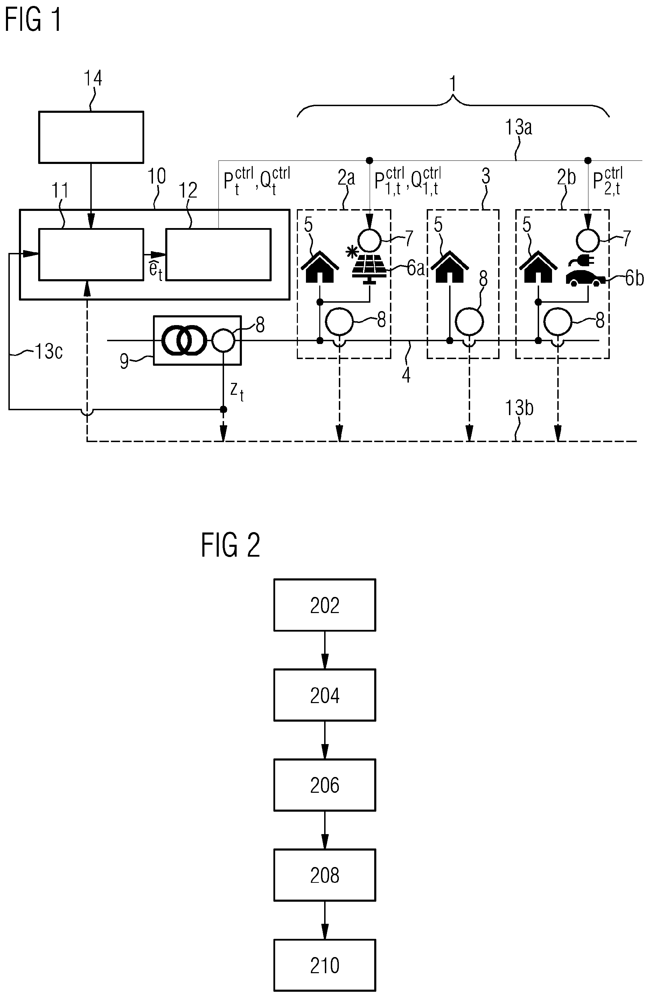

FIG 1 zeigt eine schematische Darstellung eines Energienetzes 1 und einer beispielhaften Implementierung eines Regelungssystems 10 gemäß der Erfindung.

Das Energienetz 1 beinhaltet eine Vielzahl von Netzknoten 2a, 2b, 3, 9. Die Vielzahl von Netzknoten 2a, 2b, 3, 9 umfasst regelbare Netzknoten 2a, 2b und nicht regelbare Netzknoten 3. Die Netzknoten 2a, 2b, 3, 9 sind durch Stromleitungen 4 miteinander verbunden.

Der regelbare Netzknoten 2a weist beispielsweise einen Gebäudeanschluss mit einem Gebäude 5 auf. Der Netzknoten 2a, beispielsweise das Gebäude 5, weist eine auf Photovoltaikanlage 6a auf, die eine verteilte Energieressource innerhalb des Energienetz 1 darstellt. Durch Beeinflussung einer Regelgröße 7 des Netzknotens 2a, beispielsweise der in das Energienetz 1 eingespeisten Wirk- und/oder Blindleistung, ist insbesondere die Photovoltaikanlage 6a und damit der Netzknoten 2a effektiv regelbar. Die Regelung ist dabei insbesondere durch die theoretisch maximal durch die Photovoltaikanlage 6a erzeugbare Leistung, also mit anderen Worten die installierte Leistung der Photovoltaikanlage 6a, welche eine Systemgrenze der Photovoltaikanlage 6a darstellt, und beispielsweise durch die aktuellen Wetterbedingungen begrenzt. Die Leistungsabgabe und -aufnahme kann durch ein lokales Messgerät 8, beispielsweise ein Smart Meter, gemessen werden. Die regelbaren Netzknoten 2a, 2b sind allgemein mit lokalen Messgeräten 8, insbesondere Smart Metern, ausgestattet. Diese Komponenten ermöglichen die Überwachung und Regelung der jeweiligen regelbaren Netzknoten 2a, 2b. Der regelbare Netzknoten 2b weist anstelle oder zusätzlich zu einer Photovoltaikanlage 6a einen Anschlusspunkt 6b für Elektrofahrzeuge auf.

Andere regelbare Netzknoten können beispielsweise alternativ oder zusätzlich Wärmepumpen, Batteriespeicher und so weiter aufweisen. Die nicht regelbaren Netzknoten 3 können gegebenenfalls auch lokale Messgeräte 8 aufweisen wie in FIG 1 dargestellt. Das Energienetz 1 kann selbstverständlich zusätzliche Netzknoten umfassen, die in FIG 1 nicht explizit dargestellt sind.

Die lokalen Messgeräte 8 sammeln insbesondere Daten über elektrische Parameter an ihren jeweiligen Standorten und übermitteln diese Informationen an das Regelungssystem 10. Diese Daten können Messungen von Spannung, Wirkleistung und/oder Blindleistung umfassen.

Beispielsweise ist eine Transformatorstation 9 mit einem Transformator über die Stromleitungen 4 mit den Netzknoten 2a, 2b, 3 verbunden und ermöglicht die Stromverteilung und Spannungstransformation. Die Transformatorstation 9 kann beispielsweise das Energienetz 1 mit einem größeren Energienetz verbinden. Der Transformator dient beispielsweise zur Anpassung der Spannungspegel zwischen den Energienetzen. Die Transformatorstation 9 kann ebenfalls ein lokales Messgerät 8 aufweisen, mit dem insbesondere Echtzeitmessungen durchgeführt werden und/oder historische Messdaten bereitgestellt werden können. Die Transformatorstation 9 kann ebenfalls als Netzknoten angesehen werden, insbesondere als regelbarer Netzknoten. Die Messdaten der Transformatorstation 9, die ebenfalls Spannungs-, Wirkleistungs- und/oder Blindleistungsmessungen umfassen können, können ebenfalls dem Regelungssystem 10 zur Verfügung gestellt werden.

Das Regelungssystem 10 ist zur automatischen und autonomen Regelung des Energienetzes 1 über Kommunikationsverbindungen 13a mit den regelbaren Netzknoten 2a, 2b verbunden. Die Kommunikationsverbindungen 13a ermöglichen den Datenaustausch und die Übertragung von Regelsignalen. Das Regelungssystem 10 umfasst beispielsweise ein Datenverarbeitungssystem 11 und einen Netzregler 12. Des Weiteren ist das Regelungssystem 10 über weitere Kommunikationsverbindungen 13b mit den lokalen Messgeräten 8 der Netzknoten 2a, 2b, 3 und beispielsweise über eine weitere Kommunikationsverbindung 13c mit dem Messgerät 8 der Transformatorstation 9. Das Regelungssystem 10 ist insbesondere zur Verwaltung und Optimierung des Betriebs des Energienetzes 1 verantwortlich.

Der Netzregler 12 kann beispielsweise ein OFO-Regler sein. Der Netzregler 12 ist in FIG 1 separat zu dem Datenverarbeitungssystem 11 dargestellt, kann aber auch ein Teil davon sein. Der Netzregler 12 nutzt insbesondere Daten von den lokalen Messgeräten 8 und anderen Systemkomponenten, um Entscheidungen zu treffen und Regelsignale an die regelbaren Netzknoten 2a, 2b zu senden. Dies ermöglicht ein adaptives Management des Energieflusses innerhalb des Energienetzes 1. Der Netzregler 12 empfängt beispielsweise Informationen von dem Datenverarbeitungssystem 11 und sendet die Regelsignale, beispielsweise in Form von Regelvorgaben, über die Kommunikationsverbindung 13a an die regelbaren Netzknoten 2a, 2b.

Insbesondere kann das Energienetz 1 ein Niederspannungsverteilnetz sein. Niederspannungsverteilnetze arbeiten typischerweise mit Spannungen unter 1000 Volt und verteilen Elektrizität an Endverbraucher wie Privathaushalte und vergleichsweise kleine Gewerbekunden.

Das Datenverarbeitungssystem 11 ist dazu eingerichtet, ein erfindungsgemäßes computerimplementiertes Verfahren zur Bestimmung von Regelungsvorgaben zur Regelung des Energienetzes 1 durchzuführen. FIG 2 zeigt ein schematisches Ablaufdiagramm einer beispielhaften Ausführungsform eines erfindungsgemäßen Verfahrens zur Regelung des Energienetzes 1, wobei das computerimplementierte Verfahren zur Bestimmung der Regelungsvorgaben Teil des in FIG 2 dargestellten Verfahrens ist, und insbesondere dargestellt wird durch die Verfahrensschritte 202 bis 208.

Der Verfahrensschritt 202 umfasst Schätzung des aktuellen Zustands des Energienetzes 1, wobei dieser Verfahrensschritt nicht notwendigerweise Teil des erfindungsgemäßen Verfahrens ist, sondern auch vor diesem durchgeführt werden kann. Der aktuelle Zustand des Energienetzes 1 gibt dabei für jeden Netzknoten 2a, 2b, 3, 9 einen jeweiligen Wert für wenigstens eine elektrische Größe an, insbesondere für die Spannung an dem jeweiligen Netzknoten 2a, 2b, 3, 9.

In Verfahrensschritt 204 wird basierend auf einem aktuellen Zustand des Energienetzes 1 für jeden regelbaren Netzknoten 2a, 2b ein Regeleingriff durch ein Optimierungsverfahren bestimmt. Der Regeleingriff gibt dabei jeweils eine Änderung der jeweiligen Regelgröße 7 des jeweiligen regelbaren Netzknotens 2a, 2b an.

In Verfahrensschritt 206 wird abhängig von dem jeweiligen Regeleingriff und abhängig von vorgegebenen Systemgrenzen des jeweiligen regelbaren Netzknotens 2a, 2b ein Maximalwert für die jeweilige Regelgröße 7 berechnet. In Verfahrensschritt 208 wird jeweils eine Regelungsvorgabe zur Regelung der Regelgröße 7 des jeweiligen regelbaren Netzknotens 2a, 2b basierend auf dem Maximalwert für die jeweilige Regelgröße 7 bestimmt. In Verfahrensschritt 210 wird das Energienetz 1 geregelt, indem die Regelungsvorgaben durch die regelbaren Netzknoten 2a, 2b umgesetzt werden.

Der aktuelle Zustand des Energienetzes 1, der auch als Echtzeitzustand des Energienetzes 1 bezeichnet werden kann, kann beispielsweise basierend auf jeweiligen aktuellen Messwerten, also insbesondere Echtzeitmessungen, wenigstens einer Messgröße des Energienetzes 1 geschätzt werden, beispielsweise basierend auf Wirk- und/oder Blindleistungen der Transformatorstation 9. Insbesondere kann das Datenverarbeitungssystem 11 zur Schätzung des aktuellen Zustands in Verfahrensschritt 202 kann beispielsweise ein trainiertes Maschinenlernmodell 14 aufweisen, welches dazu auf Eingangsdaten angewendet wird, welche die jeweiligen aktuellen Messgrößen der wenigstens einer Messgröße des Energienetzes 1 enthalten oder davon abhängen.

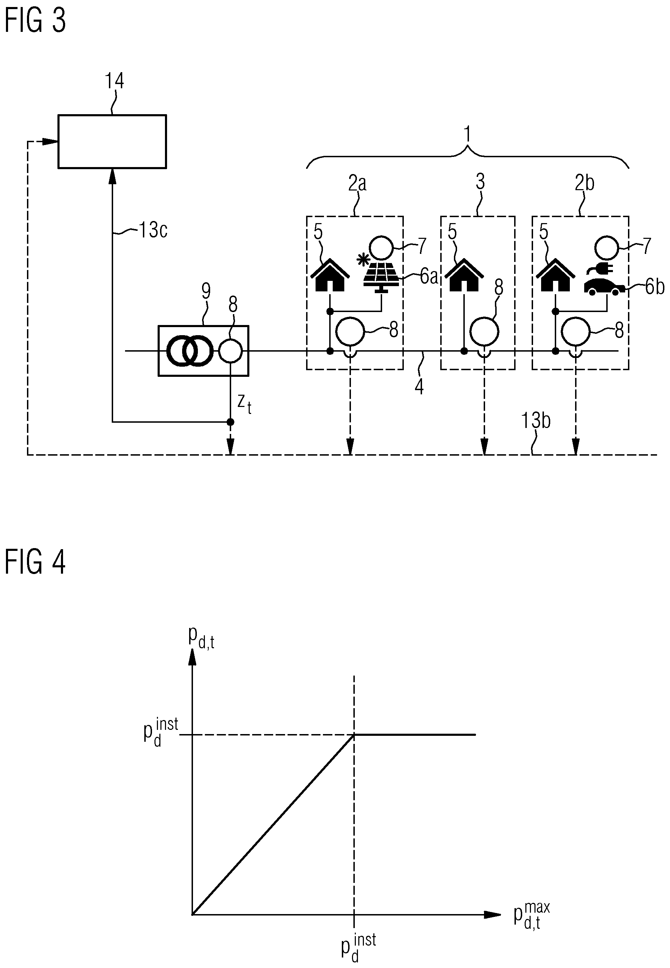

FIG 3 zeigt eine schematische Darstellung des Energienetzes 1 aus FIG 1 während einer Trainingsphase des Maschinenlernmodells 14. In diesem Beispiel ist dasselbe Energienetz 1 dargestellt wie in FIG 1, das Energienetz 1, für welches das trainierte Maschinenlernmodells 14 also verwendet werden soll. Es ist aber auch möglich, ein anderes Energienetz für die Trainingsphase zu verwenden, für das insbesondere die Annotationsdaten der Trainingsdaten leicht verfügbar sind.

Für das Training des Maschinenlernmodells 14 werden insbesondere Trainingsdaten verwendet, welche Echtzeitmessungen des Messgeräts 8 der Transformatorstation 9 als Trainingseingangsdaten enthalten, auf die das Maschinenlernmodell 14 angewendet wird, um den Echtzeitzustand des Energienetzes 1, also insbesondere die jeweilige Spannung an allen Netzknoten 2a, 2b, 3, die über ein lokales Messgerät 8 verfügen, zu prädizieren. Die Trainingsdaten weisen beispielsweise auch Annotationsdaten auf, welche den tatsächlichen Echtzeitzustand des Energienetzes 1 zum entsprechenden Zeitpunkt angeben. Die Echtzeitmessungen des Messgeräts 8 der Transformatorstation beinhalten insbesondere die Wirk- und Blindleistung sowie die Spannung direkt an der Sekundärwicklung des Transformators. Zusätzlich können die Trainingseingangsdaten entsprechende Echtzeitmessungen an jeweiligen Abgängen des Transformators beinhalten, um die Genauigkeit der Prädiktion zu erhöhen. Um den Zusammenhang zwischen Echtzeitmessungen am Transformator und Spannungsbeträgen an den lokalen Messgeräten 8 zuverlässig zu erlernen, können die Trainingsdaten beispielsweise mehrere Tage oder Wochen abdecken, sodass diverse Lastzustände abgebildet werden. Alternativ oder zusätzlich wäre es auch möglich, nicht nur diskrete Echtzeitmessungen am Transformator vorzunehmen, sondern Messungen über gewisse Messzeiträume, wie einige Minuten oder Stunden, um die Schätzung noch weiter zu verbessern, etwa indem typische Betriebsmuster erlernt werden.

Das Maschinenlernmodell 14 kann dementsprechend in konventioneller Weise als Regressor überwacht trainiert werden. Alternativ ist es auch möglich, beispielsweise Reinforcement Learning zum Trainieren des Maschinenlernmodells 14 zu verwenden.

Die Belastung von Niederspannungsnetzen steigt durch den zunehmenden Einsatz verteilter Energieressourcen. Da die bestehenden Netze in der Regel nicht für diese Belastungen ausgelegt sind, drohen potentiell verstärkt Grenzwertverletzungen, zum Beispiel Spannungsbandverletzungen, sowie Transformator- oder Leitungsüberlastungen. Um weiterhin einen sicheren Netzbetrieb zu gewährleisten, gewinnen Steuerungs- und Regelungsalgorithmen zunehmend an Bedeutung. Diese müssen auf die Anforderungen des Niederspannungsnetzes ausgelegt sein. Dazu zählen die limitierte Kenntnis der Netztopologie, die begrenzte Verfügbarkeit von Echtzeitmessungen und die eingeschränkten Zykluszeiten zum Versand von Regelsignalen. Zu den regelbaren Anlagen gehören verschiedene Arten von verteilten **Energieressourcen,** wobei eine mögliche Umsetzung eines Regelalgorithmus meist ohne Informationen über den aktuellen Zustand, zum Beispiel aktuelle Leistungswerte der Anlagen, auskommen muss. Dies erschwert die Regelbarkeit der Anlagen, da die aktuell durch die Anlage umsetzbaren Leistungsgrenzen nicht bekannt sind. Dies gilt sowohl für den Last- als auch den Erzeugungsfall. Darüber hinaus müssen regulatorische Rahmenbedingungen berücksichtigt werden, welche die Ausgestaltung des Steuerungs- beziehungsweise Regelungskonzeptes beeinflussen können.

Die OFO gewinnt im Rahmen der Regelung von Stromnetzen an Bedeutung, da diese einigen Herausforderungen, wie einer begrenzten Kenntnis der Topologie, begegnet. Kombiniert mit Verfahren der Zustandsschätzung, lässt sich OFO auch mit einer begrenzten Anzahl von Echtzeitmessungen einsetzen. Allerdings werden in bekannten Ansätzen als Regelsignale feste Leistungsvorgaben an die Anlagen übermittelt. Dies setzt eine Kenntnis der aktuellen Leistungsintervalle voraus, wovon in der Niederspannungsebene in der Regel nicht ausgegangen werden kann.

Im Folgenden sei 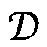 die Menge der regelbaren DER-Typen im Energienetz 1, zum Beispiel 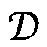 *=* {PV, EV, WP}. Weiterhin sei 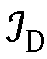 die Indexmenge der regebaren DERs vom Typ D ∈ 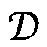 . Wie in FIG 1 gezeigt, versendet der Netzregler 12 Regelsignale ( ${P}_{d , t}^{ctrl} , {Q}_{d , t}^{ctrl}$) an alle regelbaren Netzknoten 2a, 2b für den jeweiligen Zeitschritt t. Für diese werden nachfolgend zwei unterschiedliche Ausgestaltungen vorgeschlagen. In der ersten Version erfolgt der Versand der Regelsignale als Maximalwerte. In einer zweiten Ausgestaltung werden zulässige Betriebsbereiche an die regelbaren Netzknoten 2a, 2b versendet.

Zunächst wird die Ausgestaltung der Wirkleistungsmaximalwerte ${P}_{d , t}^{max}$ sowie Blindleistungssollwerte ${Q}_{d , t}^{set}$ beschrieben. Die versendeten Regelsignale ergeben sich insbesondere wie folgt: ${P}_{d , t}^{ctrl} = {P}_{d , t}^{max} = {P}_{d}^{inst} - {P}_{d , t}^{u} , ∀ d ∈ {J}_{D} , ∀ D ∈ D$ (1) ${Q}_{d , t}^{ctrl} = {Q}_{d , t}^{set} = {Q}_{d , t}^{u} , {Q}_{d , t}^{u} ∈ \left[-{Q}_{d}^{inst},{Q}_{d}^{inst}\right] , ∀ d ∈ {J}_{D} , ∀ D ∈ D$ (2)

Dabei ist ${P}_{d}^{inst} > 0$ die installierte Wirkleistung der regelbaren Anlage d des Typs D. ${P}_{d , t}^{u} ∈$ $\left[0, \left({P}_{d}^{inst}-{P}_{d}^{gar}\right)\right]$ ist die der Anlage d zugehörige Wirkleistungsabregelung im Zeitschritt t. Alternativ kann ${P}_{d}^{inst}$ die maximale installierte Wirkleistung aller Anlagen des Typs D sein. Auf diese Weise lassen sich unterschiedliche Arten der Diskriminierungsfreiheit (gleicher Betrag der Abregelung oder gleicher Leistungsmaximalwert) erzielen. ${P}_{d}^{gar} \geq 0$ gibt die garantierte Wirkleistung der regelbaren Anlage d des Typs D an. Darüber hinaus ist ${Q}_{d}^{inst} \geq 0$ die maximal zulässige Blindleistung der regelbaren Anlage d des Typs D. ${Q}_{d}^{inst}$ lässt sich unter Verwendung des maximalen Leistungsfaktors cos φ^{max} mittels ${Q}_{d}^{inst} = {P}_{d}^{inst} ⋅ tan {φ}^{max}$ berechnen. Dabei ist φ die Phasenverschiebung.

Die versendeten Regelsignale werden anschließend von den DERs wie folgt umgesetzt. Für die Wirkleistungsmaximalwerte ${P}_{d , t}^{max}$ gilt: Sofern der aktuelle Betrag der Wirkleistung (Einspeisung oder Bezug) der regelbaren Anlage d über ${P}_{d , t}^{max}$ liegt, wird der Betrag der Wirkleistung auf den Wert ${P}_{d , t}^{max}$ reduziert. Solange der aktuelle Betrag der Wirkleistung kleiner oder gleich dem Wirkleistungsmaximalwert ${P}_{d , t}^{max}$ ist, wird die aktuelle Wirkleistung nicht beeinflusst und verbleibt unverändert. Entsprechend kann ${P}_{d , t}^{max}$ als maximal zulässige Wirkleistung für die regelbare Anlage d des Typs D interpretiert werden. Im DER wird entsprechend folgendes Verhalten nachgebildet: $Wenn {P}_{d , t} > {P}_{d , t}^{max} : {P}_{d , t} = {P}_{d , t}^{max}$ $Sonst : {P}_{d , t} = {P}_{d , t}$

Wobei *P*_{*d*,*t*} die aktuelle Wirkleistung der regelbaren Anlage d im Zeitschritt t ist. Dieses Verhalten ist in FIG 4 schematisch dargestellt. Dabei erfolgt die Reduktion der Leistung bei Überschreitung des Maximalwerts jeweils auf einen Wert auf der dargestellten Linie. Für die Blindleistungssollwerte ${Q}_{d , t}^{set}$ kann die direkte Umsetzung durch die regelbaren Anlagen erfolgen. Für die Blindleistungssollwerte ist auch eine Umsetzung analog zu den Wirkleistungsregelsignalen möglich.

Als Alternative zu den zuvor vorgeschlagenen Wirkleistungsmaximal- und Blindleistungssollwerten ( ${P}_{d , t}^{max} {, Q}_{d , t}^{set}$) können auch Wirk- und Blindleistungsbetriebsbereiche (sogenannte Operating Envelopes) ( ${P}_{d , t}^{env} , { Q}_{d , t}^{env}$) an die regelbaren Anlagen versendet werden. Dabei wird ein Leistungsbereich an die regelbaren Anlagen versendet. Die Anlagen stellen anschließend sicher, dass deren bezogene oder eingespeiste Leistung innerhalb des empfangenen Leistungsbereichs liegt. Es ist dabei nicht unbedingt zu erwarten, dass der Betrag der Leistung exakt auf den Maximalwert des Betriebsbereichs reduziert wird. Stattdessen kann auch ein anderer Wert innerhalb des Betriebsbereichs durch die DER-Anlage umgesetzt werden. Die Wirkleistungsbereiche können wie folgt definiert werden: ${P}_{d , t}^{ctrl} = {P}_{d , t}^{env} = \left[{P}_{d , t}^{min}, {P}_{d , t}^{max}\right] , ∀ d ∈ {J}_{D} , ∀ D ∈ D$ (3)

Dabei ist ${P}_{d , t}^{min} \geq 0$ ein minimaler von der Anlage umzusetzender Betrag der Wirkleistung.

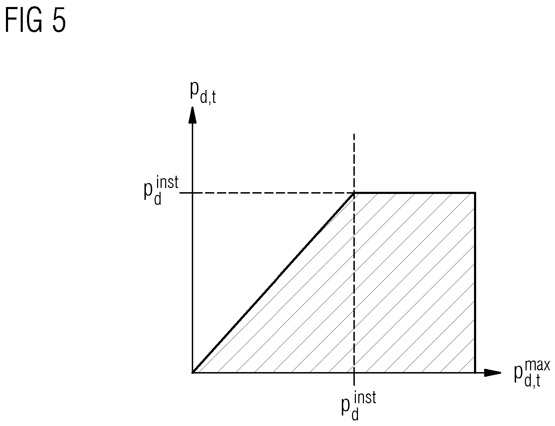

In der FIG 5 ist die Umsetzung der Regelung mittels Betriebsbereichen am Beispiel der Wirkleistung veranschaulicht. Dabei ist die schraffierte Fläche der zulässige Bereich bei Anwendung der Regelung. Für die Blindleistungsbereiche ist eine entsprechende Umsetzung realisierbar: ${Q}_{d , t}^{ctrl} = {Q}_{d , t}^{env} = \left[{Q}_{d}^{min}, {Q}_{d , t}^{max}\right] , ∀ d ∈ {J}_{D} , ∀ D ∈ D$ (4)

Darüber hinaus können die Maximalwerte oder Betriebsbereiche auch je Hausanschluss oder Netzanschlusspunkt definiert werden, anstatt diese anlagenscharf zu definieren. Die Verteilung auf die einzelnen Endkundenanlagen erfolgt dann über ein Energiemanagementsystem des Endverbrauchers.

Die Grenzwerte für die unterschiedlichen Arten der Regelsignale können dabei entsprechend individuell gemäß den aktuell gültigen regulatorischen Vorgaben einer Region angepasst werden. Beispielsweise kann die garantierte Mindestleistung ${P}_{d}^{gar}$ je nach geltender Regulatorik definiert werden.

Die Regelung basiert beispielsweise auf der OFO. Der Netzregler 12 soll dabei die DER-Regeleingriffe minimieren, wobei beispielsweise sowohl die Grenzen der Regelsignale (Wirk- und/oder Blindleistung) als auch die Grenzen des gemessenen oder geschätzten Outputs eingehalten werden sollen. Dieses Optimierungsproblem kann als nicht-konvexes quadratisches Problem der nachfolgenden Form formuliert werden: ${min}_{u} \frac{1}{2} {u}^{T} Mu$ $s . t . {z}^{min} \leq h \left(u, w\right) \leq {z}^{max} and {u}^{min} \leq u \leq {u}^{max}$

Dabei ist $u ∈ {ℝ}^{{N}_{u}}$ der Vektor der Wirk- und/oder Blindleistungseingriffe ( ${P}_{d , t}^{u} , {Q}_{d , t}^{u}$). Der Echtzeitzustand des Netzes (Spannungsbeträge, Auslastung des Transformators und der Leitungen) wird über die unbekannte Zuordnung **z** = **h(u, w)** dargestellt, wobei w die externen, unbekannten Einflussfaktoren auf das Stromnetz repräsentiert. ***z**^{min}* und ***z**^{max}* stellen die Betriebsgrenzen des betrachten Netzbereichs dar. Dazu können Spannungsbänder, Transformator- oder Leitungsauslastungen zählen. ***u**^{min}* und ***u**^{max}* sind die betrieblichen Grenzwerte der Wirk- und/oder Blindleistungseingriffe ( ${P}_{d , t}^{u} , {Q}_{d , t}^{u}$). Die Gewichtungsmatrix **M** ist eine diagonale, positiv definite Matrix, welche den einzelnen regelbaren Anlagen Aufwand und/oder Kosten für die Regelung zuordnet.

Die approximierte OFO-Lösung des zuvor definierten Optimierungsproblems kann über die nachfolgenden Schritte erreicht werden, welche eine angepasste Version des in der eingangs genannten Veröffentlichung von Ortmann et al. beschriebenen Verfahrens darstellen:
1. Ermittlung des Echtzeitzustands **zt** mittels Erfassung von ausreichenden Echtzeitmessungen oder Schätzung eines Echtzeitzustands êₜ, wobei **êₜ** ≈ **zₜ.** Im Nachfolgenden wird lediglich **zt** dargestellt.
2. Aktualisierung der dualisierten Lagrange-Multiplikatoren λₜ₊₁ unter Verwendung der Schrittweite α > 0: ${λ}_{t + 1}^{min} = {\left[{λ}_{t}^{min}+α\left({z}^{min}-{z}_{t}\right)\right]}_{\geq 0} ,$ ${λ}_{t + 1}^{max} = {\left[{λ}_{t}^{max}+α\left({z}_{t}-{z}^{max}\right)\right]}_{\geq 0} ,$
3. Berechnung der unbeschränkten Regeleingriffe mittels ${u}^{unc} = {M}^{- 1} {H}^{T} \left({λ}_{t + 1}^{min}-{λ}_{t + 1}^{max}\right)$. Dabei ist $H ∈ {ℝ}^{{N}_{SM} \times {N}_{u}}$ die gegebene Sensitivitätsmatrix. Die Sensitivitätsmatrix H ≈ $\frac{\partial h \left(u, w\right)}{\partial u}$ dient zur Abschätzung der Veränderung des Systemzustands durch Veränderung des Regelsignals **u.**
4. Berechnung der beschränken Regelsignale durch Lösung von ${u}_{t + 1} = arg {min}_{u} {\left(u-{u}^{unc}\right)}^{T} \left(u-{u}^{unc}\right) s . t . {u}^{min} \leq u \leq {u}^{max}$
5. Berechnung der Wirkleistungsmaximal- und Blindleistungssollwerte ( ${P}_{d , t}^{max} , {Q}_{d , t}^{set}$) über die obigen Formeln (1) und (2) beziehungsweise der Wirk- und Blindleistungsbetriebsbereiche ( ${P}_{d , t}^{env} , {Q}_{d , t}^{env}$) über obigen Formeln (3) (4) und Übermittlung an die regelbaren Anlagen.
6. Wiederholung ab Schritt 1 für den nächsten Zeitschritt

An dieser Stelle sei angemerkt, dass verschiedene gradientenbasierte Verfahren der Online Feedback Optimierung zur approximierten Lösung des Optimierungsproblems verwendet werden können, um das Optimierungsproblem zu lösen. Dazu zählen beispielsweise Primal-Dual-Verfahren, Projected-Gradient-Verfahren oder Dual-Ascent-Verfahren.

Unabhängig vom grammatikalischen Geschlecht eines bestimmten Begriffes sind Personen mit männlicher, weiblicher oder anderer Geschlechteridentität mit umfasst.

### Bezugszeichenliste

- 1: Energienetz
- 2a: regelbarer Netzknoten
- 2b: regelbarer Netzknoten
- 3: Netzknoten
- 4: Stromleitungen
- 5: Gebäude
- 6a: Photovoltaikanlage
- 6b: Anschlusspunkt
- 7: Regelgröße
- 8: lokale Messgeräte
- 9: Transformatorstation
- 10: Regelungssystem
- 11: Datenverarbeitungssystem
- 12: Netzregler
- 13a: Kommunikationsverbindung
- 13b: Kommunikationsverbindung
- 13c: Kommunikationsverbindung
- 14: Maschinenlernmodell
- 202: Verfahrensschritt
- 204: Verfahrensschritt
- 206: Verfahrensschritt
- 208: Verfahrensschritt
- 210: Verfahrensschritt

## Patentansprüche

1. Computerimplementiertes Verfahren zur Bestimmung von Regelungsvorgaben zur Regelung eines Energienetzes (1), welches eine Vielzahl von Netzknoten (2a, 2b, 3, 9) aufweist, wobei
- basierend auf einem aktuellen Zustand des Energienetzes (1), welcher für jeden Netzknoten (2a, 2b, 3, 9) der Vielzahl von Netzknoten (2a, 2b, 3, 9) einen jeweiligen Wert für wenigstens eine elektrische Größe angibt, durch ein Optimierungsverfahren für jeden regelbaren Netzknoten (2a, 2b) der Vielzahl von Netzknoten (2a, 2b, 3, 9) ein Regeleingriff bestimmt wird, der eine Veränderung einer vorgegebenen Regelgröße (7) des jeweiligen regelbaren Netzknotens (2a, 2b) angibt; und
- für jeden der regelbaren Netzknoten (2a, 2b) abhängig von dem jeweiligen Regeleingriff und abhängig von vorgegebenen Systemgrenzen des jeweiligen regelbaren Netzknotens (2a, 2b) ein Maximalwert für die Regelgröße (7) des jeweiligen regelbaren Netzknotens (2a, 2b) berechnet wird und eine Regelungsvorgabe zur Regelung der Regelgröße (7) des jeweiligen regelbaren Netzknotens (2a, 2b) basierend auf dem Maximalwert für die jeweilige Regelgröße (7) bestimmt wird.

2. Computerimplementiertes Verfahren gemäß Anspruch 1, wobei die Regelungsvorgabe gleich dem Maximalwert für die Regelgröße (7) des jeweiligen regelbaren Netzknotens (2a, 2b) ist.

3. Computerimplementiertes Verfahren gemäß Anspruch 1, wobei für jeden der regelbaren Netzknoten (2a, 2b) abhängig von dem jeweiligen Regeleingriff ein Minimalwert für die Regelgröße (7) berechnet wird oder der Minimalwert vorgegeben ist und
- die Regelungsvorgabe ein Wertebereich von dem Minimalwert für die Regelgröße (7) bis zu dem Maximalwert der Regelgröße (7) ist; oder
- die Regelungsvorgabe ein Sollwert für die Regelgröße (7) ist, der zwischen dem Minimalwert und dem Maximalwert liegt.

4. Computerimplementiertes Verfahren, wobei der aktuelle Zustand des Energienetzes (1) basierend auf jeweiligen aktuellen Messwerten wenigstens einer Messgröße des Energienetzes (1) geschätzt wird.

5. Computerimplementiertes Verfahren nach Anspruch 4, wobei die Vielzahl von Netzknoten (2a, 2b, 3, 9) an eine gemeinsame Transformatorstation (9) angeschlossen sind und die wenigstens eine Messgröße eine Spannung und/oder eine Wirkleistung und/oder eine Blindleistung der Transformatorstation (9) enthält oder davon abhängt oder durch die Spannung oder die Wirkleistung oder die Blindleistung gegeben ist.

6. Computerimplementiertes Verfahren nach einem der Ansprüche 4 oder 5, wobei zum Schätzen des aktuellen Zustands des Energienetzes (1) ein Maschinenlernmodell (14) auf Eingangsdaten angewendet wird, welche die jeweiligen aktuellen Messgrößen der wenigstens einer Messgröße des Energienetzes (1) enthalten oder davon abhängen.

7. Computerimplementiertes Verfahren nach einem der vorhergehenden Ansprüche, wobei
- die wenigstens eine elektrische Größe eine Spannung an dem jeweiligen Netzknoten (2a, 2b, 3, 9) ist oder enthält oder von der Spannung an dem jeweiligen Netzknoten (2a, 2b, 3, 9) abhängt; und/oder
- die Regelgröße (7) eine Wirkleistung und/oder eine Blindleistung an dem jeweiligen regelbaren Netzknoten (2a, 2b, 3, 9) enthält oder davon abhängt oder durch die Wirkleistung oder die Blindleistung an dem jeweiligen regelbaren Netzknoten (2a, 2b, 3, 9) gegeben ist.

8. Computerimplementiertes Verfahren nach einem der vorhergehenden Ansprüche, wobei das Optimierungsverfahren mittels eines Online-Feedback-Optimierungs-Reglers (12) durchgeführt wird.

9. Computerimplementiertes Verfahren nach einem der vorhergehenden Ansprüche, wobei gemäß dem Optimierungsverfahren eine Gesamtheit der Regeleingriffe der regelbaren Netzknoten (2a, 2b) minimiert wird.

10. Computerimplementiertes Verfahren nach einem der vorhergehenden Ansprüche, wobei
- basierend auf dem aktuellen Zustand des Energienetzes (1) durch das Optimierungsverfahren oder durch ein weiteres Optimierungsverfahren für jeden der regelbaren Netzknoten (2a, 2b) der Vielzahl von Netzknoten (2a, 2b, 3, 9) ein weiterer Regeleingriff bestimmt wird, der eine Veränderung einer vorgegebenen weiteren Regelgröße (7) des jeweiligen regelbaren Netzknotens (2a, 2b) angibt; und
- für jeden der regelbaren Netzknoten (2a, 2b) abhängig von dem jeweiligen weiteren Regeleingriff eine weitere Regelungsvorgabe zur Regelung der weiteren Regelgröße (7) des jeweiligen regelbaren Netzknotens (2a, 2b) abhängig von dem jeweiligen weiteren Regeleingriff bestimmt wird.

11. Computerimplementiertes Verfahren nach Anspruch 10, wobei
- die weitere Regelungsvorgabe ein Sollwert für die weitere Regelgröße (7) ist; und/oder
- die weitere Regelgröße (7) eine Blindleistung an dem jeweiligen Netzknoten (2a, 2b, 3, 9) ist oder enthält oder von der Blindleistung an dem jeweiligen Netzknoten (2a, 2b, 3, 9) abhängt.

12. Verfahren zur Regelung eines Energienetzes (1), wobei ein computerimplementiertes Verfahren nach einem der vorhergehenden Ansprüche durchgeführt wird, die Regelungsvorgaben den regelbaren Netzknoten (2a, 2b) zur Regelung des Energienetzes (1) bereitgestellt werden und das Energienetz (1) mittels der regelbaren Netzknoten (2a, 2b) gemäß den Regelungsvorgaben geregelt wird.

13. Datenverarbeitungssystem (11), das dazu eingerichtet ist, ein computerimplementiertes Verfahren gemäß einem der Ansprüche 1 bis 11 durchzuführen.

14. Regelungssystem (10) zur automatischen Regelung eines Energienetzes (1), aufweisend ein Datenverarbeitungssystem (11) nach Anspruch 13 und jeweilige lokale Regler für die regelbaren Netzknoten (2a, 2b), wobei die lokalen Regler dazu eingerichtet sind, das Energienetz (1) gemäß den Regelungsvorgaben zu regeln.

15. Computerprogrammprodukt aufweisend Befehle, die bei Ausführung durch ein Datenverarbeitungssystem (11) das Datenverarbeitungssystem (11) dazu veranlassen, ein computerimplementiertes Verfahren gemäß einem der Ansprüche 1 bis 11 durchzuführen.
